Europäisches Patentamt

European Patent Office

Office européen des brevets

(11) Publication number: **0 280 773**
**A2**

## (12) EUROPEAN PATENT APPLICATION

(21) Application number: **87117301.9**

(22) Date of filing: **24.11.87**

(51) Int. Cl.⁴: **G06F 11/14**

A request for addition of page 11 to the originally filed description has been filed pursuant to Rule 88 EPC. A decision on the request will be taken during the proceedings before the Examining Division (Guidelines for Examination in the EPO, A-V, 2.2).

(30) Priority: **09.01.87 US 1719**

(43) Date of publication of application:
**07.09.88 Bulletin 88/36**

(84) Designated Contracting States:
**DE FR GB**

(71) Applicant: **International Business Machines Corporation**
**Old Orchard Road**
**Armonk, N.Y. 10504(US)**

(72) Inventor: **Dievendorff, Richard**
**443, South Forestdale Avenue**
**Covina California 91723(US)**
Inventor: **Jenner, Earle Henderson**
**6963 Bret Harte Drive**
**San Jose California 95120(US)**
Inventor: **Palmer, John Davis**
**1443 Medallion Drive**
**San Jose California 95120(US)**

(74) Representative: **Grant, Iain Murray**
**IBM United Kingdom Limited Intellectual**
**Property Department Hursley Park**
**Winchester Hampshire SO21 2JN(GB)**

(54) **Recovery enhancement in a transaction-oriented data processing system.**

(57) The number of log records required to be written and read in supporting the reconstruction of a volatile queue of objects is minimised and conveniently relocated by selectively relogging on attaining an activity threshold post start or the most recent checkpoint. Only those objects which remain in the queue for a long period of time will be rewritten. If high activity reflects high queue usage, then the objects will qualify for relogging in a shorter period of clock time.

EP 0 280 773 A2

## RECOVERY ENHANCEMENT IN A TRANSACTION-ORIENTED DATA PROCESSING SYSTEM

The present invention relates to recovery enhancement in a transaction-oriented data processing system in which concurrently executing, failure-independent processes share a common log, said log being used in recovery and restart operations responsive to system failure.

As pointed out by C. J. Date, "An Introduction to Database Systems", Vol. 1, 4th Edition, Addison-Wesley Publishing Co., copyright 1986, Chapter 18, a "transaction" is defined to be a logical "unit of work". A "unit of work" consists of a sequence of operations that transforms a consistent state of a recoverable resource into another consistent state without necessarily preserving consistency at all intermediate points.

A system supporting "transaction" processing includes logical and physical entities that are generically known as "resources", and software components that are generically known as "resource managers". Within this environment, a "transaction" becomes a system-controlled unit of work executing an application-oriented program. The program, in turn, uses the system-provided resources under the control of the system's resource managers.

A transaction processing system guarantees that if a transaction executes some updates against a recoverable data collection, and a failure occurs before the transaction reaches its normal termination or an interim point of consistency, then those updates will be undone. A transaction is initiated with a special BEGIN UNIT OF WORK operation and ends with either a COMMIT operation or an ABORT operation. The COMMIT and ABORT operations provide atomicity. The COMMIT operation signifies that a new point of consistency has been reached and all updates made by the unit of work must be made permanent. The ABORT operation means that a fault has occurred and any changes made thus far by the unit of work must be uncommitted, or undone, and returned to the prior point of consistency.

A system which manages recoverable data collections also guarantees their contents will be protected against loss or damage to the storage media in which the collections are kept. If a failure of this type occurs, the system must provide a method for reconstructing the data collection.

To meet the transaction recovery and data collection recovery guarantees, the system records in a "recovery log" the progress of a unit of work representing a transaction from its beginning to its end, and its actions which cause changes to recoverable data objects. The recovery log becomes the source for ensuring either that the unit of work's committed actions are reflected, or that its uncommitted actions are reversed. If the logged actions reflect data object content, then those records also become the source for reconstruction of a damaged or lost data collection.

Transactions define the unit of recovery (UR) in addition to a unit of work. The progress of a UR may be characterised as being in one of several states. These states are defined as follows:

Commit-Indoubt - The unit of recovery exists within the system, has reached a new point of consistency, and can either continue to successful completion, or its actions can still be undone. The final decision is pending. If the work unit is interrupted by a failure, the system must be in a position to wait for the decision and then perform the appropriate completion actions.

Ensure-Commit - The unit of recovery exists within the system and has reached the point in its existence where all of its actions must be completed, even if interrupted by some failure.

Disposition Completed - The unit of recovery no longer exists within the system, and therefore cannot be interrupted by a failure. However, the unit of recovery's completion actions must be reflected during any data collection recovery processing.

The actions which alter recoverable data objects are reflected in the log by UNDO and REDO records. The UNDO log record reflects the content of a data object before the altering action is made. The REDO log record reflects its content after the change. If a failure occurs, the progress state of a UR is used in determining which records will be used. If the change is made to the data collection storage medium and the UR is "inflight", then the UNDO log record is used during transaction recovery to back out the change in that medium. If the data collection storage medium is nonvolatile (e.g., is DASD) and the UR is in any state other than "inflight", the REDO log record is used during recovery to ensure the medium copy of the object has been updated.

If a data collection is lost due to media failure, it would be possible to recreate the collection if all REDO log records since the collection was created were saved and available. In practice, a nonvolatile copy of the data collection is made periodically and saved, and the log position at the time the copy was made is noted. Then, if a failure occurs, the recovery log is processed from the remembered position. The REDO records from that point, representing all actions to the data collection which were made by URs whose current status is other than "inflight", are reprocessed against the saved data collection copy.

Transaction processing systems implement "checkpoints". The checkpoint's purpose is to minimise the amount of log information that must be read and selectively processed during a restart situation. Checkpoints are periods during normal processing when the resource managing components record resource status information in a safe place (e.g., the recovery log). Where a data collection was lost due to media failure, the log position at the time the data collection copy was made would most probably be "remembered" in a checkpoint record.

A "checkpoint event" is initiated based on the passage of time, or on the amount of activity being handled by the system. The data within the most recent checkpoint serves as resource manager initialising information should it become necessary to restart the system before another checkpoint can be taken.

This invention deals primarily with the problems of data collection recovery when the data collection resides in a volatile medium. Message queues are an example of the type of data collection often found suited for volatile media storage in a transaction processing system. The volume of message activity into and out of message queues can be very high, and yet the duration of time a message remains queued, awaiting processing or delivery, is normally very short. For purposes of this invention, message queues will be referenced as a typical instance of a recoverable resource.

Queue reconstruction using serially recorded log records would be relatively fast and simple if all messages, once queued, were dequeued and processed without delay. The REDO records representing a queue's content would be clustered near the end of the log, and minimal log scanning would be required. However, if a message remains queued for a significantly long period of time, its age severely influences the queue reconstruction time. The typical solution is to relog a queue's content periodically such as during a checkpoint, thereby reducing the span of the log which must be read during queue reconstruction.

According to the present invention, however, there is provided a method for enhancing recovery in a transaction-oriented data processing system in which a sequentially recorded message log is maintained and to which log, periodic checkpointing is made, the method comprising selectively reprocessing message activity sequentially recorded in the log by:

    (a) counting message activity recorded in the log and invoking system checkpoint processing each time the count matches a predetermined threshold; and

    (b) rerecording a subset of message activity recorded in said log to a checkpoint after an interval has elapsed since the initial log recording or most recent checkpoint rerecording of the subset; whereby, in the event of system restart and recovery processing, all messages subject to recovery are clustered within a relatively small span along the log.

In the prior art, several references describe log-based, transaction-oriented systems. These include:

    (1) Gawlick et al, USP 4,507,751, "Method and Apparatus for Logging Journal Data Using a Log Write Ahead Data Set", issued March 26, 1985.

    (2) Crus, "Data Recovery in IBM Database 2", IBM Systems Journal, Vol. 23, copyright 1984, pp. 178-188.

    (3) IBM IMS/SNAP Queue Checkpoint Facility.

    (4) Gray, "Notes on Database Operating Systems", in "Operating Systems: An Advanced Course", Vol. 60, Springer-Verlag Publishing Co., copyright 1978, pp. 383-481.

    (5) Lindsay et al, "Notes on Distributed Database", IBM Research Report RJ 2571, San Jose, California.

The current logging technology described by the references writes all log data produced by a transaction-oriented system into a single stream of data physically resident at a point in time on multiple DASD or tape devices, with only one device being written upon at each instant. The Gawlick patent (1) describes the writing to a log before record dequeued through the normal sequence of events. Minimising the number of messages relogged reduces the cost that preparing for a possible recovery situation can have on normal transaction processing.

It was also observed that controlling the age when messages become eligible for relogging affects the balance of a transaction processing system's activity load with its potential restart time in the event of a failure. In this sense, the age of a message is not based on clock time, but rather on system activity. If high activity reflects high message queue usage, the queue being the time ordering of occurrence of messages, then messages will qualify for relogging in a shorter period of clock time.

A good measurement of system activity was found to be the recovery log. Several transaction-oriented systems currently use the technique of counting log recordings in determining checkpoint frequencies.

When the count reaches a certain threshold, a checkpoint event is initiated. The period between the consecutive checkpoint events is referred to, in this specification, as a "checkpoint interval".

Although the prior art, such as the IMS/SNAP Queue, writes the entire contents of the message queue to the log each time it is invoked, the method of this invention, in contrast, requires only the relogging of a sufficiently small message subset to enable periodic, automatic relogging to occur without disrupting normal transaction processing.

In this specification, the terms "recording", "logging", "writing", and "copying" are taken to be synonyms.

The present invention will be described further by way of example with reference to an embodiment thereof as illustrated in the accompanying drawings, in which

Figures 1-4 pictorially depict the logging and selective relogging activity within a series of checkpoint intervals, and the maintenance and logging of structures related to the method of this invention in a transaction-oriented system. and

Figures 5 and 6 support a description of one embodiment of the invention in the form of a pseudocode implementation model, Figure 5 depicting the relationships of the primary control structures of the implementation and Figure 6 illustrating the relevant contents of the structures.

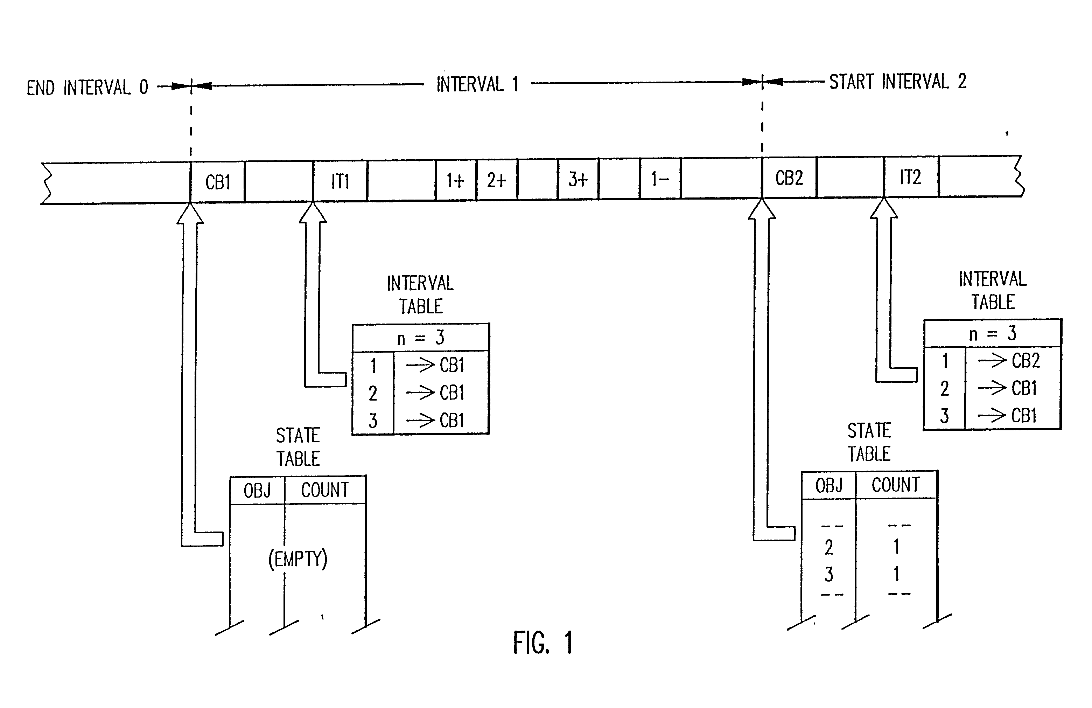

A transaction processing system includes a Message Manager that manages message queues represented by a state table, a Log Manager for writing records to a journal, and a Recovery Manager for handling records during restart. In Figures 1-4, there are depicted a journal, the entries to which constitute a recovery log, identified checkpoint intervals, and the state table and an interval table maintained by the Message Manager.

In discussing the contents of the state table, an element number is the notation used to identify the table entries (messages). For each change in the state table, the Message Manager requests that the Log Manager write a record to the log. For purposes of illustrating the selected method, it is assumed that the state table entries reference only message additions or message deletions to the log and do not refer to modification of messages. This is not a necessary restriction, but serves merely to simplify the discussion. The log record identifying the appearance of a new message in the state table is designated by the element number and a plus (+) sign. The log record for the deletion of a message is designated by the element number and a minus (-) sign.

The interval table is used to keep track of the checkpoint intervals of consequence which are represented in the log at any point in time. For illustrative purposes, the interval table used in Figures 1-4 depicts three intervals. This means a message added to the state table during Interval 1 will be eligible for relogging following the start of Interval 4. If the message continues to remain in the state table, it will again be eligible for relogging at the start of Interval 7. The checkpoint events are designated by CBn in the figures, and only serve to establish identifiable positions in the log. The interval table is logged during each checkpoint and is designated as ITn. This log record delimits the Message Manager's completion of each checkpoint event processing. The most recently logged interval table is used to create the interval table used during a restart situation. Its oldest entry identifies the oldest checkpoint event to which the log must be positioned in order to retrieve the initial or relogged log records of all messages.

Figure 1 shows a state table which is empty as of the start of Interval 1 (CB1). Since no previously logged or relogged messages need be located during restart if a failure interrupts Interval 1, all interval table entries point to the start of the current checkpoint whenever the state table is empty. The interval table is logged (IT1) to complete the checkpoint event processing. During Interval 1, four message-related events occur. Three messages arrive, identified in the log as 1+, 2+, and 3+, and are added to the state table (queues). Then one message is deleted, logged as 1-, and is removed from the state table, leaving only messages 2 and 3, as shown.

Sections of the log shown as empty in the figures would not actually be empty, but could contain records contributed by other resource managers using the same Log Manager. Those records are also counted when determining the frequency of checkpoints. When the activity load reaches a specified threshold, a checkpoint event occurs, Interval 1 ends, and Interval 2's starting position in the log is established (CB2).

During each checkpoint, the Message Manager tests the age of each entry in the state table, relative to the current checkpoint, to determine whether or not the message is eligible for relogging. A simple counter method is shown in the figures to make the aging concept more easily understood. A counter associated with each entry in the state table is set to zero when the entry is created, is incremented by 1 during

4

checkpoint processing, and the result tested to see if the message has reached relogging age (an age of 3 checkpoints is used in these figures). Neither message 2 nor 3 has reached that age, and so their relogging is postponed. The interval table is shifted (aged), dropping its oldest entry and adding a new entry 1 to reflect the start of Interval 2. The table is then logged (IT2), signifying the Message Manager's end of processing for this checkpoint event.

Using the Figure 1 log, if a failure occurs anytime during Interval 2, the Recovery Manager would first locate the most recent checkpoint, that which starts Interval 2. The IT2 log record, written during the checkpoint, would be used to reconstruct the interval table. The log would then be repositioned to CB1, the point identified in the interval table's oldest entry. As the log is read forward from that point, the records would be processed as follows:

IT1: Ignored.
1+, 2+, 3+: Messages added to the state table (COUNT = 0).
1-: Message 1 deleted from the state table.
IT2: Ignored. Reflect messages' ages (+1 to COUNTs).

The result at the end of restart processing would be a state table and interval table at the start of Interval 2, as shown in Figure 1. Normal transaction processing could now continue.

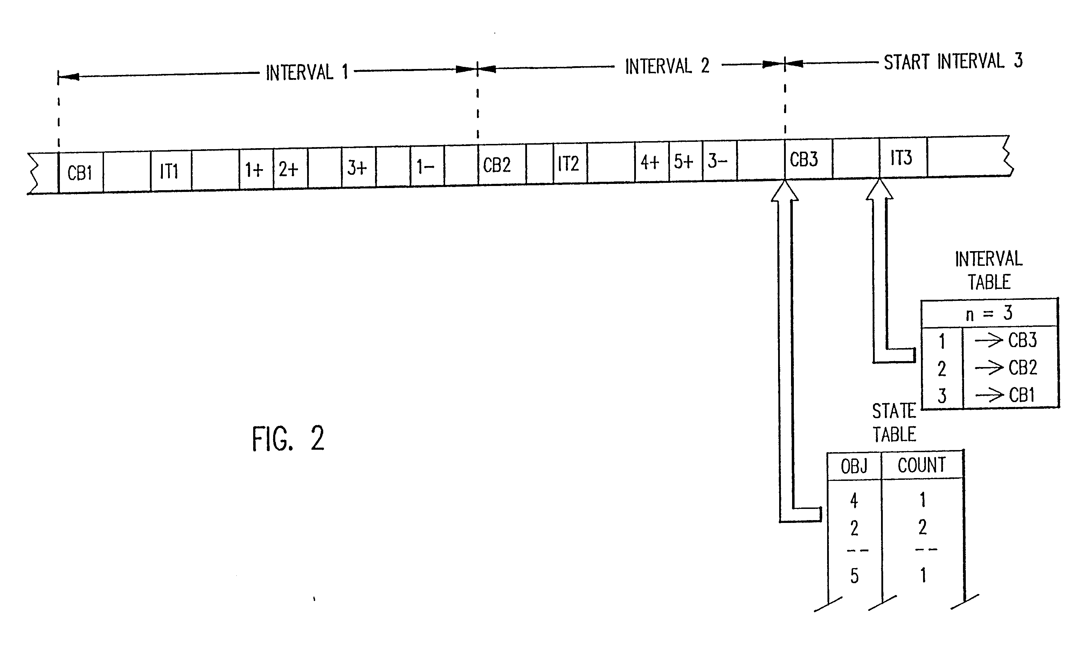

Referring now to Figure 2, the log is shown at a later time. During Interval 2, messages 4 and 5 arrive, are logged as 4+ and 5+, and added to the state table. Message 3 is deleted, logged as 3-, and is removed from the state table. Another activity load threshold is reached, resulting in a checkpoint event that ends Interval 2 and starts Interval 3 (CB3). The age of each state table entry is again tested for relogging eligibility, in this example, by incrementing and testing the counter associated with each state table entry. In Figure 2, none of the messages has yet reached the age of 3 checkpoints, and so only the interval table is aged and logged. Note that all three checkpoints shown in Figure 2 are now represented in the IT3 interval table.

If a failure interrupts the system at any time during Interval 3, the IT3 log record would be used to recreate the interval table during restart. The log would then be repositioned and read forward from the CB1 log record. The log records would be processed as follows:

IT1: Ignored.
1+, 2+, 3+: Messages added to the state table
        (COUNT = 0).
1-: Message 1 deleted from the state table.
IT2: Ignored. Reflect messages' ages
        (+1 to COUNTs).
4+, 5+: Added to the state table (COUNT = 0).
3-: Message 3 deleted from the state table.
IT3: Ignored. Reflect messages' ages
        (+1 to COUNTs).

The result after restart processing would be a state table and interval table as shown in Figure 2, ready for normal processing.

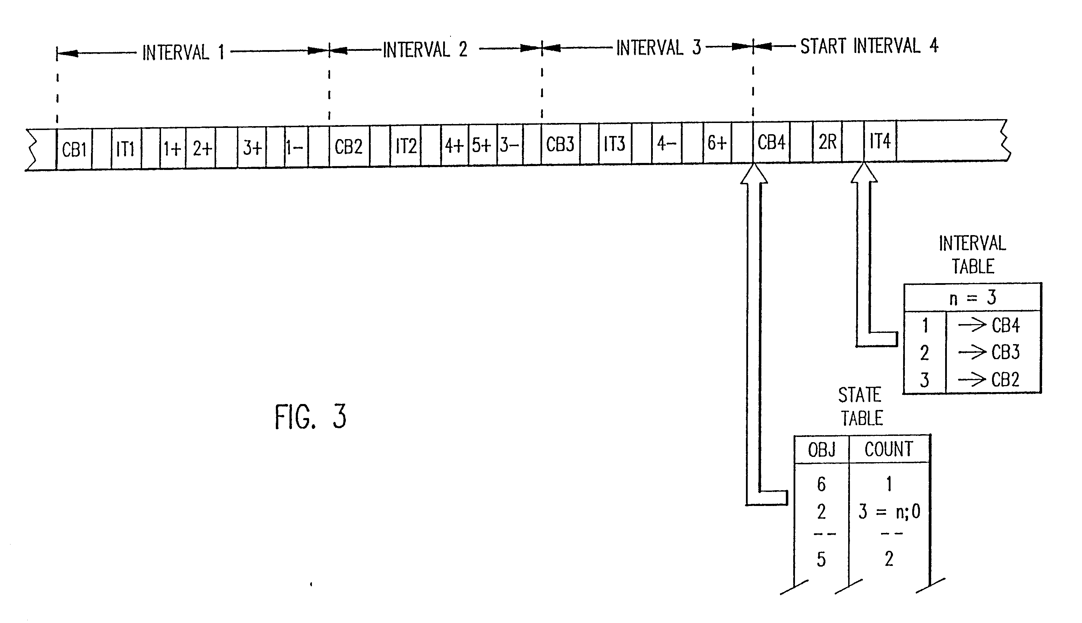

Figure 3 shows the log after Interval 3 has completed. Message 4 has been deleted (4-) during Interval 3, and message 6 has been added (6+). Interval 3 then ends and Interval 4 starts with another checkpoint event (CB4). Message 2 has now reached the age where it must be relogged (COUNT = 3 in the example). The message is relogged, as represented by the 2R log record, as part of the Message Manager's checkpoint event processing. Its state table entry is reset to signify the beginning of a new relog eligibility period by clearing its counter, in this example. After all relog records for Interval 4 have been written, the interval table is aged, the pointer to CB1 is dropped, the pointer to CB4 is added, and the table is logged (IT4).

If a failure occurs during Interval 4, the IT4 record would be used as the interval table during restart. The oldest entry in that table would cause positioning to go back to the CB2 position. Note that Interval 1's log records are no longer needed during this restart situation. The records represented in Figure 3 would then be processed from that point forward as follows:

IT2: Ignored.
4+, 5+: Added to the state table (COUNT = 0).
3-: Ignored. No matching state table entry.

5

IT3: Ignored. Reflect messages' ages (+1 to COUNTs).
4-: Message 4 deleted from the state table.
6+: Message 6 added to the state table (COUNT = 0).
2R: Message 2 added to the state table (COUNT = -1).
IT4: Ignored. Reflect messages' ages (+1 to COUNTs).

The restart processing result would be a state table and interval table as shown in Figure 3. Observe that three message subsets now exist: the newest (COUNT = 0), the next older (COUNT = 1), and the oldest (COUNT = 2). The oldest entries in the interval table only need to reflect the oldest message subset (represented here by the highest COUNT value). Therefore, if messages 5 and 6 had been deleted, leaving only message 2 (and its COUNT = 0), then, as an optimisation, all entries in the interval table could point to the beginning of Interval 4 (CB4).

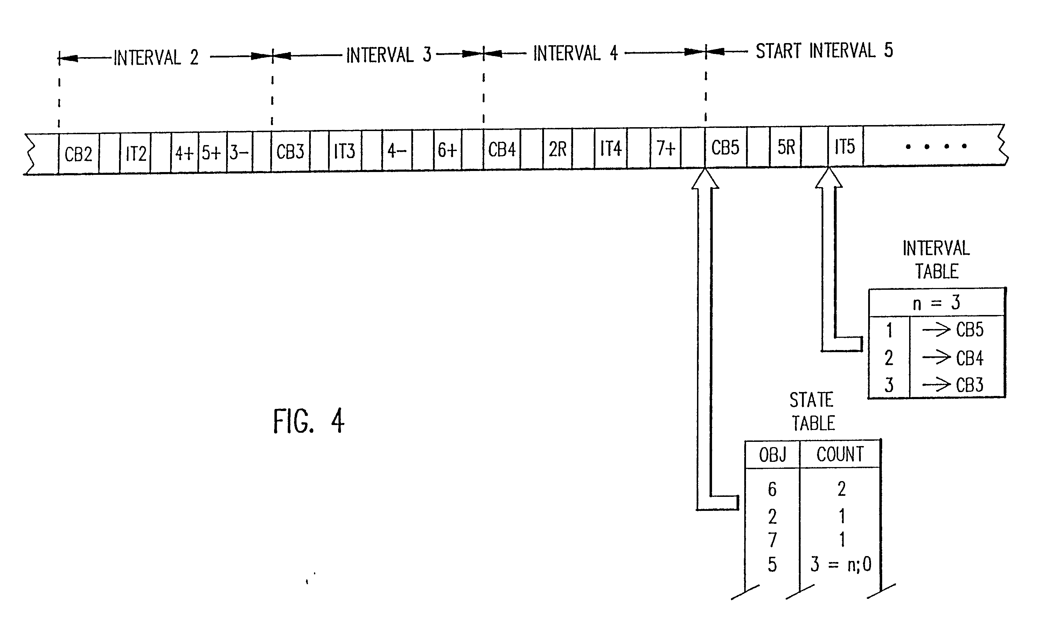

Figure 4 shows message 7 (7+) being added during Interval 4. Because message 2's relog record and the initial log record for message 7 appear in the same interval (Interval 4), they now become members of the same relog subset. If both messages remain in their queues, they will both be relogged following the checkpoint event which starts Interval 7. Figure 4 also shows message 5 becoming eligible for relogging following Interval 5's checkpoint event.

Given a failure during Interval 5, IT5 would be used for the interval table during restart, and forward processing would begin at the start of Interval 3. The log records would be processed as follows:

IT3: Ignored.
4-: Ignored. No matching state table entry. *
6+: Message 6 added to the state table (COUNT = 0).
2R: Message 2 added to the state table (COUNT = -1).
IT4: Ignored. Reflect messages' ages (+1 to COUNTs).
7+: Message 7 added to the state table (COUNT = 0).

5R: Message 5 added to the state table (COUNT = -1).
IT5: Ignored. Reflect messages' ages (+1 to COUNTs).

The result of restart processing would be a state table and interval table as shown in Figure 4.

The advantage of the method is that the number of records which must be written during a specific checkpoint can be much smaller than the total size of the state table. In this example, a total of seven messages would be relogged during the checkpoints for Intervals 4 and 5 if all queued messages were relogged, while only two messages were relogged using the selected method. Of course, in any system in which a state table contains thousands of entries, the savings would be substantially greater. If relogging is not done, then a failure in Interval 5 would necessitate repositioning the log back to Interval 1 in order to obtain the message 2's initial log record. Conversely, relogging all messages at each checkpoint shortens the distance back in the log to which restart must be positioned if the queue must be rebuilt, but can add significant overhead to normal transaction processing. By periodically relogging message subsets, this method provides the means of balancing the normal processing overhead with the potential restart time for queue reconstruction.

Message queues have been used as the example data collection to which the method can be applied. However, it is equally applicable to other data collection situations, such as main storage data bases and buffer pools. As with messages, the decision to checkpoint a particular main storage data object can be based on whether or not a copy of the object exists on the log since it was last checkpointed. If the object has changed and the change has been logged, then it may be unnecessary to relog it during the current checkpoint. In fact, it may be appropriate to defer relogging for some threshold interval.

Two important aspects of the method were omitted from the foregoing description:

(1) Consideration must be given to the possibility of a failure while performing the checkpoint event processing. Situations where some, but not all, relog records within a subset have been recorded can occur. It is important that the implementation recognise and properly handle relog records from incomplete checkpoint events.

* In an actual implementation, a log record representing a deletion of an object may not match a queued object when the deletion is read, but could match a subsequently encountered relog record, and the relog record must be discarded. The condition has been omitted from this description, but is reflected later in a pseudocode implementation model.

6

(2) Because the logging of a unit of recovery's update action occurs before unit of recovery (UR) completion, it is possible to log an object's deletion, then relog the object itself, and finally log the UR's commit completion. As noted previously in the discussion of Figure 4, this sequence, when read during data collection recovery processing, requires that deletion actions be remembered so the relog record can be discarded.

These situations have been addressed in the following implementation model.

A message queue resource management component is used to illustrate the implementation model. Processes not included in the model are the work unit actions of adding to and deleting from the queues, and work unit commit and abort sequences.

In the implementation model, the recovery log is assumed to be a single stream of time-sequenced log records where each record has been assigned a uniquely identifiable relative position value, referred to as an RBA. A unique timestamp per log record would serve the same purpose. The RBA values replace the counter method used in Figures 1-4 for determining the age of messages and when they qualify for relogging.

The implementation model assumes that a serialisation capability, referred to as "latching", exists where, by following defined protocols, exclusive use of a resource can be obtained.

Five tables contain the pseudocode sequences of the flow of control for the checkpoint and restart processes. It is during the restart process that all data collection recovery is accomplished.

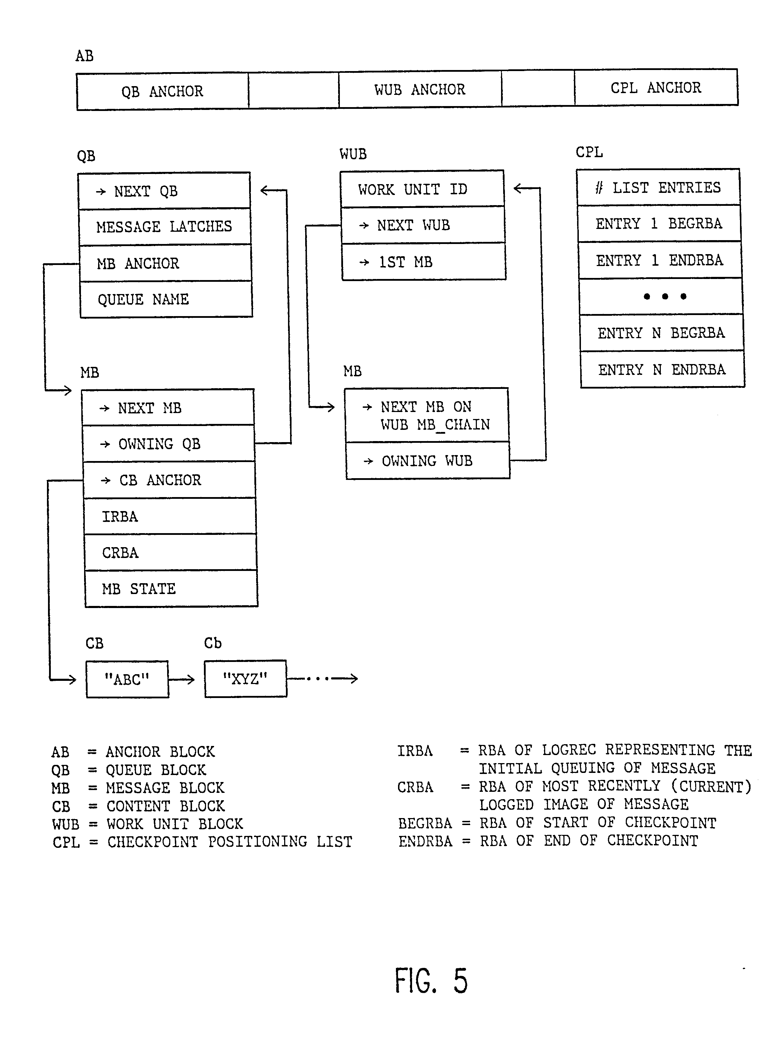

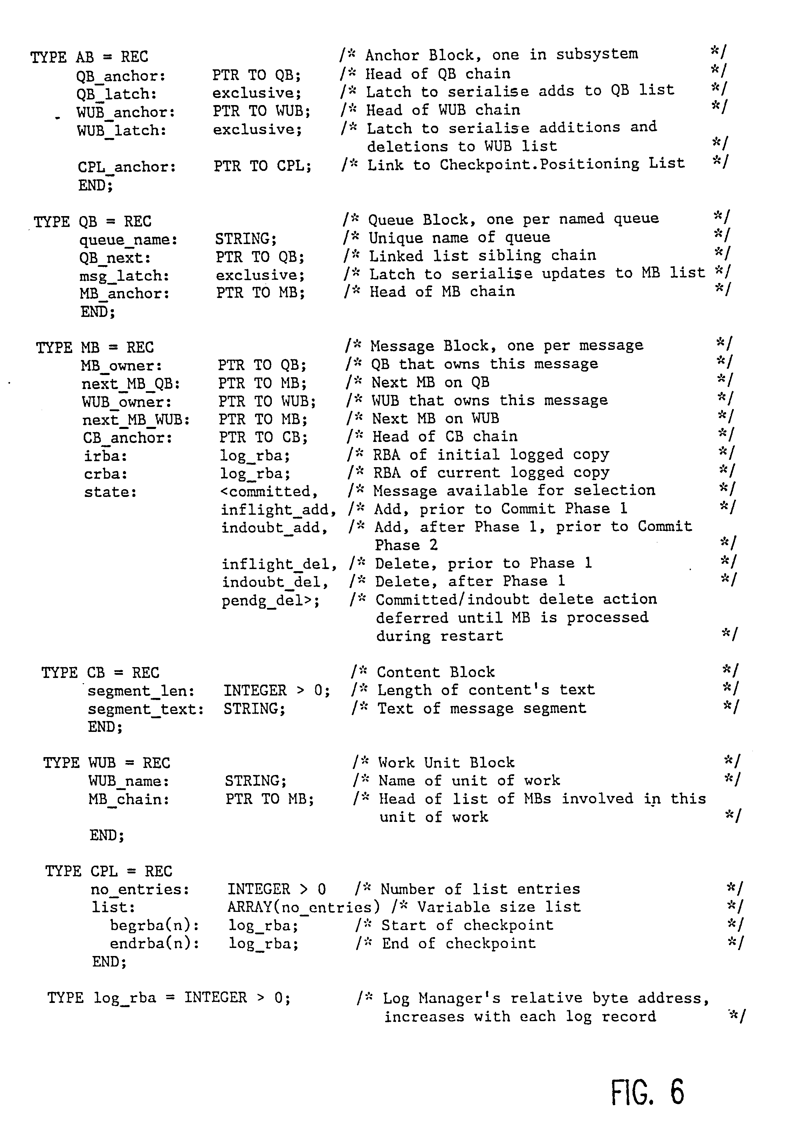

Note that the steps in the pseudocode pertinent to the present invention and found in the tables that follow, are identified by asterisks (*). Figures 5 and 6 show a pictorial representation and the relevant content of the Message Manager's primary control structures.

## Checkpoint Processing

The Message Manager maintains one Anchor Block (AB) from which other structures are located. A Queue Block (QB) exists for each message queue. Many messages, each represented by a Message Block (MB), can exist within any single queue, and each message's content is represented by one or more Content Blocks (CBs). The QB, MB, and AB combination of structures is analogous to the state table and its entries described earlier.

The Message Manager represents each work unit currently accessing messages by a Work Unit Block (WUB), and the MBs representing the messages are chained off the WUB.

The Checkpoint Positioning List (CPL) is the control structure used by the Message Manager to keep track of the checkpoint intervals in which each subset of the message queues will be relogged. The CPL is analogous to the interval table described above.

The Message Manager participates in checkpoint processing by logging all of its structures needed to recreate an initial operating environment in the event of a Message Manager termination before completion of a subsequent checkpoint. Table 1 illustrates an embodiment of the checkpoint processing but only includes the processing necessary to recover the active message queues (QBs), their queued messages (MBs), their message content (CBs), and a list of completed checkpoints (CPL) during a subsequent restart.

Two structures which are key to this implementation model are the Message Block (MB) and the Checkpoint Positioning List (CPL).

The MB represents a queued message and contains, among other things, two log-rba values:

a value representing the message's initial recording position on the log (IRBA) when it was first enqueued, and

a value representing its most current log or relog (CRBA) position.

The CPL is a list of "n" pairs of log-rba values, where each pair delimits the start (BEGRBA) and end (ENDRBA) positions on the recovery log of a prior checkpoint event. The number of pairs is an externally definable value which represents the number of checkpoint events which are to occur before a message is considered eligible for relogging. The CPL itself is logged as part of each checkpoint, and then its pairs of entries are "aged" such that the oldest pair of log-rba values is dropped from the list, and the most recent checkpoint's positioning values are added as the newest pair.

## TABLE 1

```
* Set oldest-not-logged-rba to log-rba of start of current
    checkpoint.
  Acquire AB.QB-latch to defer additions of QBs.
  DO for all QBs (head of list at AB.QB-anchor).
    Acquire QB.msg-latch to prevent UR interference.
*   DO for all MBs on QB (head of list at QB.MB-anchor).
*     IF MB.state is not "inflight-add", AND
*         it is either a termination checkpoint, OR
*         the MB.crba is equal to or less than the oldest
*         CPL.endrba, THEN
*       DO.
*         Write the MB relog record.
*         Update MB.crba with log-rba of MB relog record.
*         Write CBs message content relog records.
*       END.
*     ELSE MB does not qualify for relogging now
*       DO.
*         IF MB.crba is not zero, AND is less than
*             oldest-not-logged-rba THEN
*           Change oldest-not-logged-rba to MB.crba.
*         ELSE.
*       END.
*   END.
  Checkpoint QB after writing all its reloggable MBs/CBs
      Relog records.
  Release QB.msg-latch.
  END.
  Release AB.QB-latch to permit additions of QBs.

* DO for all CPL.begrba and CPL.endrba values in the CPL.
* IF value is less than oldest-not-logged-rba THEN
*   Set value to oldest-not-logged-rba.
*     (Note - This optimizes positioning during a restart
*     situation to no earlier in the log than the oldest
*     message still enqueued.)
* ELSE.
* Write Checkpoint Positioning List checkpoint record.
*     (The earliest log-rba value in this record is used in
*     a restart situation to establish positioning for the
*     2nd restart phase.)
* Shift the pairs of log-rba values in the CPL, dropping
*     the oldest pair.
* Set the most recent CPL.begrba to the log-rba of start
*     of the current checkpoint.
* Set the most recent CPL.endrba to the log-rba of the
*     Checkpoint Positioning List checkpoint record.

  Exit this routine.
```

## Restart Processing

The restart process consists of four phases:
(1) Current Status Rebuild,
(2) Forward Recovery,
(3) Backward Recovery, and
(4) Restart Cleanup.

A system component, such as the Recovery Manager, normally controls the restart process by notifying resource managing components of the various restart phases and making log records contributed by those components available for processing during the appropriate phases.

## The First Phase - Current Status Rebuild

It is during this phase that the records from the most recent checkpoint, plus any event records made subsequent to the start of the checkpoint, are processed by their responsible components. From these records, resource managing components rebuild all or part of the structural representation of their resource collections as it was at the most recent termination.

Table 2 illustrates the current status rebuild phase of restart processing required. The Message Manager processes its checkpoint records, and the UR REDO records it contributed as follows, reconstructing its representation of message queues (QBs), and Checkpoint Positioning List (CPL) as they were at the time of termination.

TABLE 2

```
IF not end of Current Status Rebuild phase THEN
    IF a QB checkpoint record, OR a QB definition event
        record THEN
      DO.
          Search for matching QB using logrec's queue name.
          IF QB not found THEN
              Build new QB and enqueue to QB chain from
                  AB.QB-anchor.
          ELSE.
      END.
    ELSE.

*     IF it is a Checkpoint Positioning List checkpoint
*         record THEN
*       DO.
*           Build CPL from logrec content and chain to
*               AB.CPL-anchor.
*           Save oldest CPL.endrba value for 2nd restart phase
*               positioning.
*           Shift pairs of log-rba values in the CPL, dropping
*               oldest pair.
*           Set most recent CPL.begrba to log-rba of start most
*               recent checkpoint.
*           Set most recent CPL.endrba to log-rba of this
*               logrec.
*       END.
*     ELSE.   (Not Checkpoint Positioning List checkpoint
              record.)
              -
              -     (Process other record types not relevant to
                    the present discussion.)
              -
    ELSE it is end of Current Status Rebuild phase.
*       Ensure that CPL was built, and if not, build one with
*           all BEGRBA and ENDRBA values equal to log-rba of
*           start most recent checkpoint.

    Exit this routine.
```

### The Second Phase - Forward Recovery

During this restart phase, resource management components normally reconstruct their environment such that by the end of the phase, the structural representations of their resource collections are pretty much as they were just prior to the most recent system termination. This process includes repeating the actions of work units which were interrupted by that termination before their actions could be irrevocably completed (Ensure-Commit), or whose status is Commit-Indoubt.

Table 3 illustrates the forward recovery phase of restart processing required. The Message Manager processes MB and CB relog records, and UR REDO records contributed by the Message Manager for Ensure-Indoubt, and Commit-Indoubt URs, and URs whose status is Disposition Completed. They are processed in a time-ordered sequence, as represented by their relative positions on the log, starting with the Message Manager's oldest ENDRBA position obtained from the Checkpoint Positioning List checkpoint record.

Relog records are only processed during this phase if their log-rbas fall within completed checkpoints delimited by the BEGRBA and ENDRBA values in the CPL. This is done because a prior termination could have interrupted an in-progress checkpoint, and some messages may have been relogged during that checkpoint while others had not. The Checkpoint Positioning List checkpoint record, from which initial log positioning for this phase is obtained, is written after all eligible messages have been relogged, and to process relog records from an incomplete checkpoint could result in a single message being erroneously processed twice.

## TABLE 3

```
*   DO for all Relog MB logrecs.
*      IF the Relog MB logrec is not within a completed
*          checkpoint delimited by all CPL.begrba and
*          CPL.endrba values THEN
*         Exit this routine (ignore logrec).
*      ELSE.   (Relog MB logrec is within completed
*         checkpoint.)
*      Locate matching QB using logrec's queue name.
*      IF not found (as of termination all messages queued to
*          QB had been dequeued, and the QB was freed) THEN
*         Exit this routine (ignore logrec).
*      ELSE.   (Relog MB logrec applies to an active queue.)
*      Search for matching MB chained off QB.MB-anchor using
*         logrec IRBA.
*      IF matching MB is not found THEN
*         DO.
*            Build MB from Relog MB logrec, MB.state =
*               "committed", MB.crba = Relog MB logrec log-rba.
*            IF Relog MB record state = "indoubt-add" or
*                indoubt-del" THEN
*               Set MB.state = Relog MB record state.
*            ELSE.   (Leave MB.state = "committed".)
*            Add MB to QB.MB-anchor in MB.irba sequence.
*         END.
*      ELSE matching MB is found
*         DO.
*            IF matching MB is a pending delete element
*                (MB.state = "pendg-del") THEN
*               DO.
*                  IF matching MB.state is also = "indoubt-del"
*                      THEN
*                     Change matching MB.state = "indoubt-del"
*                        only (remove pending state designation),
*                        MB.crba = Relog MB logrec log-rba.
*                  ELSE.
*                  IF matching MB.state is also = "committed"
*                      THEN
*                     Dequeue and free matching MB and any of
*                        its CBs.
*                  ELSE.
*               END.
*            ELSE not a pending delete element
*               DO.
*                  Dequeue all CBs from MB.CB-anchor and free
*                      them.
*                     These will be replaced by Relog CB logrecs
*                        that follow this Relog MB logrec.
*                  Change matching MB.crba = Relog MB logrec
```

## TABLE 3 cont.

```
*            log-rba.
*       END.
*     END.
*  END for all Relog MB logrecs.
*  DO for all UR REDO ADD MB logrecs.
*     IF logrec's IRBA field = 0 THEN
*        Set logrec's IRBA field = REDO ADD MB logrec log-rba.
*     ELSE.
*     Locate matching QB using logrec's queue name.
*     IF not found (as of termination all messages queued to
*        QB had been dequeued, and the QB was freed) THEN
*        Exit this routine (ignore logrec).
*     ELSE.  (REDO ADD MB logrec applies to an active queue.)
*     Search for matching MB chained off QB.MB-anchor using
*        logrec IRBA.
*     IF matching MB is found THEN
*        DO.
*           IF matching MB.state = "pendg-del" THEN
*              Change matching MB.crba = REDO ADD MB logrec
*                 log-rba.
*           ELSE not a pending delete element
*              DO.
*                 Dequeue all CBs from MB.CB-anchor and free
*                    them.
*                  These will be replaced by REDO ADD CB logrecs
*                     that follow this REDO ADD MB logrec.
*                 Change matching MB.crba = REDO ADD MB logrec
*                    log-rba.
*              END.
*           Set MB.state = "committed".
*           IF state of UR associated with logrec is "indoubt"
*                 THEN
*              DO.
*                 Change MB.state = "indoubt-add".
*                 Build WUR, if not already built.
*                 Chain MB to WUR.MB-chain, if not already done.
*              END.
*           ELSE.  (Assumes UR state is either "disposition-
*                 complete" or "ensure-commit".  MB.state is
*                 preset = "committed".)
*        END.
*     ELSE matching MB is not found
*        DO.
*           Build MB from content of REDO ADD MB logrec.
*           Set MB.irba and MB.crba = REDO ADD MB logrec
*              logrba.
*           Set MB.state = "committed".
*           IF state of UR associated with logrec is "indoubt"
*                 THEN
```

TABLE 3 cont.

```
*            DO.
*               Change MB.state = "indoubt-add".
*               Build WUR, if not already built.
*               Chain MB to WUR.MB-chain.
*            END.
*         ELSE.   (Assumes UR state is either "disposition-
*                 complete" or "ensure-commit".  MB.state is
*                 preset = "committed".)
*            Add MB to QB.MB-anchor.
*         END.
*   END for all UR REDO ADD MB logrecs.

*   DO for all UR REDO DEL MB logrecs.
*      Locate matching QB using logrec's queue name.
*      IF not found (as of termination all messages queued to
*         QB had been dequeued, and the QB was freed) THEN
*         Exit this routine (ignore logrec).
*      ELSE.   (REDO DEL MB logrec applies to an active queue.)
*      Search for matching MB chained off QB.MB-anchor using
*         logrec IRBA.
*      IF matching MB is found THEN
*         DO.
*            IF state of UR associated with logrec is "indoubt"
*               THEN
*               DO.
*                  Change MB.state = "indoubt-del".
*                  Build WUR, if not already built.
*                  Chain MB to WUR.MB-chain.
*               END.
*            ELSE assumes state of UR associated with logrec is
*                 either "disposition-complete" or "ensure-
*                 commit"
*               Dequeue and free matching MB and its CBs.
*         END.
*      ELSE matching MB is not found
*         DO.
*            Build pending delete element from content of REDO
*               DEL MB logrec.
*            Set MB.state = "pendg-del" and "committed".
*            IF state of UR associated with logrec is "indoubt"
*               THEN
*               DO.
*                  Change MB.state = "pendg-del" and
*                     "indoubt-del".
*                  Build WUR, if not already built.
*                  Chain MB to WUR.MB-chain.
*               END.
```

TABLE3 cont.

```
*           ELSE.    (Assumes state of UR associated with logrec
*                   is either "disposition-complete" or "ensure-
*                   commit".  State of pending delete element is
*                   preset = "pendg-del" and "committed".)
*           Add MB to QB.MB-anchor.
*      END.
* END for all UR REDO DEL MB logrecs.
* DO for all Relog CB and UR REDO ADD CB logrecs.
*    DO for all Relog CB logrecs.
*       IF log-rba of Relog CB is not within a completed
*          checkpoint delimited by all CPL.begrba and
*          CPL.endrba values THEN
*        Exit this routine (ignore logrec).
*       ELSE.   (Relog CB logrec is within completed
*               checkpoint.)
*    END for all Relog CB logrecs.
*    Locate matching QB using logrec's queue name.
*    IF not found (as of termination all messages queued to
*        QB had been dequeued, and the QB was freed) THEN
*        Exit this routine (ignore logrec).
*    ELSE.   (Logrec applies to an active queue.)
*    Search for matching MB chained off QB.MB-anchor using
*       logrec IRBA.
*    IF matching MB is found THEN
*       Build CB from logrec and chain to matching
*          MB.CB-anchor.
*    ELSE.   (Ignore logrec.)
* END for all Relog CB and UR REDO ADD CB logrecs.

     Exit this routine.
```

## The Third Phase - Backward Recovery

During this restart phase, resource managing components are given the opportunity to reverse the actions of work units which were interrupted before they reached a new point of consistency (Inflight). This process is often referred to as Backout or UNDO recovery.

Table 4 illustrates an embodiment of backward recovery processing . The Message Manager processes UR UNDO log records it contributed for Inflight URs. They are processed in a reverse-time order starting with the most recently logged record and continuing backward through the log until the start of each Inflight UR has been accounted for. For each action to be undone, the Message Manager writes compensating UR REDO records representing the reversing actions to the recovery log. This way, the log will accurately reflect the net result of a UR's actions when it enters a Disposition Completed state.

## TABLE 4

```
If it is a UR UNDO log record THEN
   DO.
      Locate appropriate QB using queue name from logrec.
      IF not found (as of termination all messages queued
           to QB had been dequeued, and the QB was freed)
         THEN
         Exit this routine (ignore logrec).
      ELSE.  (UNDO logrec applies to an active queue.)
      IF an ADD MB logrec THEN
         DO.
            IF logrec's IRBA value = 0 THEN
               Set logrec's IRBA = logrec's RBA.
            ELSE.  (IRBA already a known value.)
            Log REDO DEL MB compensating record containing
               IRBA and queue name.
            Search for matching MB using logrec's IRBA.
            IF found (message is queued, and must be dequeued
                 to backout the interrupted UR) THEN
               Dequeue MB and CBs from QB and free them.
            ELSE.  (Message was not queued, so no backout is
                 required.)
         END.
      ELSE is a DEL MB logrec
         DO.
            Locate matching MB using IRBA from logrec.
            Log REDO ADD MB compensating record containing
               IRBA and queue name.
            Log message content CBs.
            Set MB.state to "committed", and MB.crba =
               log-rba of logrec.
         END.
      END.
   ELSE.  (Not a UR UNDO logrec.)

   Exit this routine.
```

### The Fourth Phase - Restart Cleanup

Resource management components often need to perform some cleanup functions upon completion of restart. Table 5 illustrates an embodiment of the restart cleanup processing required for this embodiment. The Message Manager must ensure the CPL used for subsequent processing reflects the proper number of entry pairs (it could be different from the one used during restart). It must also verify the states of all MBs, and remove any unmatched pending deletes.

16

TABLE 5

```
*   IF CPL.no-entries is less than the currently defined
*        value THEN
*      Initialise the excess entry CPL.begrba and CPL.endrba
*        values to the same values from the most recent entry
*        in the CPL.
*   ELSE.
*   IF CPL.no-entries is greater than the currently defined
*        value THEN
*      Shift the entry pairs dropping the oldest excess
*        entries from the CPL.
*   ELSE.
*   Set CPL.no-entries = currently defined value.

*   DO for all QBs chained off AB.QB-anchor.
*      DO for all MBs chained off QB.MB-anchor.
*        DO CASE on MB.state.
*          FOR CASE MB.state = "pendg-del"
*            Unchain and free the MB.
*          FOR CASE MB.state = "indoubt-del"
*            IF MB not chained to a WUB THEN
*                Unchain and free the MB and its chained CBs.
*            ELSE.  (UR is "indoubt" and MB.state cannot be
*                        resolved now.)
*          FOR CASE MB.state = "indoubt-add"
*            IF MB not chained to a WUB THEN
*                Set MB.state = "committed".
*            ELSE.  (UR is "indoubt" and MB.state cannot be
*                        resolved now.)
*          OTHERWISE
*            Set MB.state = "committed".
*        END CASE on MB.state.
*      END for all MBs chained off QB.MB-anchor.
*   END for all QBs chained off AB.QB-anchor.
```

Exit this routine.

The disclosed method is ideally suited to a message processing environment where incoming messages arrive in the system, are queued for processing, and are removed from the queue and processed. The result of the processings are outgoing messages which are queued for delivery to destinations, and are dequeued and delivered. Typically, the queues are only maintained in a volatile storage media, queue activity is high, and a message's time in the queue is short. A message processing environment is used in describing the method. However, the method may be equally applicable to other object queuing situations.

**Claims**

1. A method for enhancing recovery in a transaction-oriented data processing system in which a sequentially recorded message log is maintained and to which log, periodic checkpointing is made, the method comprising selectively reprocessing message activity sequentially recorded in the log by:

(a) counting message activity recorded in the log and invoking system checkpoint processing each time the count matches a predetermined threshold; and

(b) rerecording a subset of message activity recorded in said log to a checkpoint after an interval has elapsed since the initial log recording or most recent checkpoint rerecording of the subset;

whereby, in the event of system restart and recovery processing, all messages subject to recovery are clustered within a relatively small span along the log.

2. A method as claimed in claim 1, wherein messages inbound to the system are enqueued by transaction type for processing, and messages outbound from said system are enqueued by destination identity for transmission.

3. A method as claimed in either preceding claim wherein only those messages not otherwise deleted are rewritten whereby rewriting of messages is a function of threshold message activity and delay and the number of data objects rewritten is reduced.

4. A method as claimed in any preceding claim, said system including a log resource manager for operatively controlling log access responsive to system message activity, said message activity including messages to be added to the system and messages for deleting previously added messages from the system, wherein a table is maintained of only those messages not deleted since the last checkpoint and only those messages identified in the table and recorded on said log are rerecorded.

5. A method as claimed in claim 4, said system including a recovery manager, wherein said recovery manager in cooperation with the log resource manager, in the event of system failure and subsequent restart, recreates the table by reading the log starting with a begin checkpoint record and adding and deleting from the table entries so identified.

FIG. 1

0 280 773

FIG. 2

0 280 773

0 280 773

INTERVAL 1 — INTERVAL 2 — INTERVAL 3 — START INTERVAL 4

| CB1 | IT1 | 1+ | 2+ | 3+ | 1– | CB2 | IT2 | 4+ | 5+ | 3– | CB3 | IT3 | 4– | 6+ | CB4 | 2R | IT4 |

INTERVAL TABLE

| $n = 3$ | |
|---|---|
| 1 | → CB4 |
| 2 | → CB3 |
| 3 | → CB2 |

STATE TABLE

| OBJ | COUNT |
|---|---|
| 6 | 1 |
| 2 | $3 = n; 0$ |
| – – | – – |
| 5 | 2 |

FIG. 3

| | | | | | | | | | | | | | | | | | |
|---|---|---|---|---|---|---|---|---|---|---|---|---|---|---|---|---|---|
| CB2 | | IT2 | 4+ | 5+ | 3− | CB3 | IT3 | 4− | 6+ | CB4 | 2R | IT4 | 7+ | CB5 | 5R | IT5 | . . . . . |

INTERVAL 2 — INTERVAL 3 — INTERVAL 4 — START INTERVAL 5

FIG. 4

**INTERVAL TABLE**

| n = 3 | |
|---|---|
| 1 | → CB5 |
| 2 | → CB4 |
| 3 | → CB3 |

**STATE TABLE**

| OBJ | COUNT |
|---|---|
| 6 | 2 |
| 2 | 1 |
| 7 | 1 |
| 5 | 3 = n;0 |

AB

| QB ANCHOR | | WUB ANCHOR | | CPL ANCHOR |
|---|---|---|---|---|

**QB**

| |
|---|
| → NEXT QB |
| MESSAGE LATCHES |
| MB ANCHOR |
| QUEUE NAME |

**MB**

| |
|---|
| → NEXT MB |
| → OWNING QB |
| → CB ANCHOR |
| IRBA |
| CRBA |
| MB STATE |

**CB**　　　　**Cb**

| "ABC" | → | "XYZ" | ─···─→ |
|---|---|---|---|

**WUB**

| |
|---|
| WORK UNIT ID |
| → NEXT WUB |
| → 1ST MB |

**MB**

| |
|---|
| → NEXT MB ON WUB MB_CHAIN |
| → OWNING WUB |

**CPL**

| |
|---|
| # LIST ENTRIES |
| ENTRY 1 BEGRBA |
| ENTRY 1 ENDRBA |
| ● ● ● |
| ENTRY N BEGRBA |
| ENTRY N ENDRBA |

AB = ANCHOR BLOCK
QB = QUEUE BLOCK
MB = MESSAGE BLOCK
CB = CONTENT BLOCK
WUB = WORK UNIT BLOCK
CPL = CHECKPOINT POSITIONING LIST

IRBA = RBA OF LOGREC REPRESENTING THE INITIAL QUEUING OF MESSAGE
CRBA = RBA OF MOST RECENTLY (CURRENT) LOGGED IMAGE OF MESSAGE
BEGRBA = RBA OF START OF CHECKPOINT
ENDRBA = RBA OF END OF CHECKPOINT

# FIG. 5

```
TYPE AB = REC                              /* Anchor Block, one in subsystem        */
    QB_anchor:      PTR TO QB;             /* Head of QB chain                      */
    QB_latch:       exclusive;             /* Latch to serialise adds to QB list    */
    WUB_anchor:     PTR TO WUB;            /* Head of WUB chain                     */
    WUB_latch:      exclusive;             /* Latch to serialise additions and
                                              deletions to WUB list                */
    CPL_anchor:     PTR TO CPL;            /* Link to Checkpoint.Positioning List   */
    END;

TYPE QB = REC                              /* Queue Block, one per named queue      */
    queue_name:     STRING;                /* Unique name of queue                  */
    QB_next:        PTR TO QB;             /* Linked list sibling chain             */
    msg_latch:      exclusive;             /* Latch to serialise updates to MB list */
    MB_anchor:      PTR TO MB;             /* Head of MB chain                      */
    END;

TYPE MB = REC                              /* Message Block, one per message        */
    MB_owner:       PTR TO QB;             /* QB that owns this message             */
    next_MB_QB:     PTR TO MB;             /* Next MB on QB                         */
    WUB_owner:      PTR TO WUB;            /* WUB that owns this message            */
    next_MB_WUB:    PTR TO MB;             /* Next MB on WUB                        */
    CB_anchor:      PTR TO CB;             /* Head of CB chain                      */
    irba:           log_rba;               /* RBA of initial logged copy            */
    crba:           log_rba;               /* RBA of current logged copy            */
    state:          <committed,            /* Message available for selection       */
                    inflight_add,          /* Add, prior to Commit Phase 1          */
                    indoubt_add,           /* Add, after Phase 1, prior to Commit
                                              Phase 2                              */
                    inflight_del,          /* Delete, prior to Phase 1              */
                    indoubt_del,           /* Delete, after Phase 1                 */
                    pendg_del>;            /* Committed/indoubt delete action
                                              deferred until MB is processed
                                              during restart                      */

TYPE CB = REC                              /* Content Block                         */
    segment_len:    INTEGER > 0;           /* Length of content's text              */
    segment_text:   STRING;                /* Text of message segment               */
    END;

TYPE WUB = REC                             /* Work Unit Block                       */
    WUB_name:       STRING;                /* Name of unit of work                  */
    MB_chain:       PTR TO MB;             /* Head of list of MBs involved in this
                                              unit of work                         */
    END;

TYPE CPL = REC
    no_entries:     INTEGER > 0            /* Number of list entries                */
    list:           ARRAY(no_entries)      /* Variable size list                    */
      begrba(n):    log_rba;               /* Start of checkpoint                   */
      endrba(n):    log_rba;               /* End of checkpoint                     */
    END;

TYPE log_rba = INTEGER > 0;                /* Log Manager's relative byte address,
                                              increases with each log record       */
```

FIG. 6